# FASCICULE DE BREVET EUROPEEN

(11) **EP 2 435 266 B1**
(45) Date de publication et mention de la délivrance du brevet: **10.07.2013**
(21) Numéro de dépôt: 10728790.6
(22) Date de dépôt: 19.05.2010
(51) Int. Cl.: B60J 1/00, B60J 1/02

(54) **VITRAGE A FAIBLE NIVEAU DE DOUBLE IMAGE**
FENSTERSCHEIBE MIT REDUZIERTEM DOPPELBILD-EFFEKT
WINDOW PANE WITH REDUCED DOUBLE-IMAGE EFFECT

(30) Priorité: 27.05.2009 FR 0953505
(43) Date de publication de la demande: 04.04.2012
(73) Titulaire: Saint-Gobain Glass France, 92400 Courbevoie (FR)
(72) Inventeur: PAYEN, Corinne, F-60150 Montmacq (FR); THELLIER, Hervé, F-60170 Pimprez (FR); LESAGE, Jean-Luc, F-60200 Compiègne (FR)
(74) Mandataire: Colombier, Christian
(86) Numéro de dépôt international: PCT/FR2010/050975
(87) Numéro de publication internationale: WO 2010/136702

(56) Documents cités:
- WO-A1-2004/103922
- FR-A1- 2 680 584

## Description

L'invention concerne le domaine des vitrages, notamment automobiles, à faible niveau de double-image. Un tel vitrage est connu par exemple de FR 268584 A.

Les vitrages automobile, notamment du type pare-brise ou lunette arrière doivent présenter un minimum de défauts optiques pour des raisons de sécurité et pour des raisons esthétiques. La vision du conducteur doit être la plus claire possible et il n'est notamment pas tolérable que l'image qu'il perçoit de l'environnement de la voiture soit dédoublée. La multiplication de l'image vue par le conducteur à travers le pare-brise est un phénomène connu venant de réflexions multiples aux interfaces air/verre. On parle généralement de double image même si en théorie d'autres images supplémentaires existent car ces images supplémentaires sont de très faible intensité. Une réflexion supplémentaire s'accompagne en effet d'une perte d'intensité importante de l'image parasite, de l'ordre d'un facteur 100 par rapport à l'intensité de l'image principale. L'importance du phénomène est accentuée par l'inclinaison du vitrage.

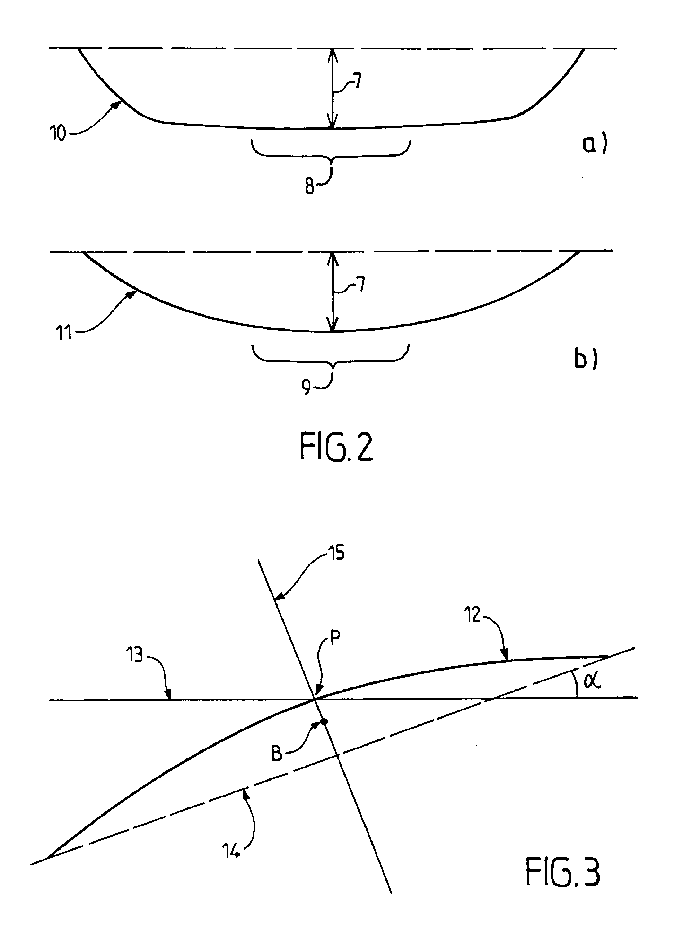

On sait calculer par ordinateur le niveau de double image théorique, lequel est exprimé par l'homme du métier par un chiffre en minutes. Ce niveau dépend de nombreux facteurs comme l'épaisseur des feuilles constituant le pare-brise, de la courbure locale, mais aussi de l'angle de vision à travers le vitrage. On distingue le niveau de double-image vertical (les images apparaissent l'une au-dessus de l'autre quand on est assis dans le véhicule) du niveau de double-image horizontal (les images apparaissent l'une à côté de l'autre quand on est assis dans le véhicule). L'inclinaison habituelle du pare-brise génère de la double-image verticale alors qu'on n'a généralement pas de problème de double-image horizontale. Plus le vitrage est monté proche de l'horizontale sur le véhicule automobile (comme par exemple sur la figure 3), plus le niveau de double-image vertical augmente. On considère aujourd'hui que le niveau de double-image maximal acceptable (dans toutes les directions) est de 7 minutes, car il est considéré comme étant imperceptible par l'oeil humain. C'est le niveau de double-image vertical qu'il est difficile de contenir à au plus 7 minutes pour les vitrages particulièrement inclinés en position d'utilisation. La mesure du niveau de double-image peut être réalisée par la technique de mesure à la cible (en anglais : « Target test ») ou la technique du test au collimateur (en anglais : « collimation-telescope test ») comme décrites dans le règlement N° 43 ,additif 42, de l'accord E/ECE/324, E/ECE/TRANS/505, concernant l'adoption de prescriptions techniques uniformes applicables aux véhicules à roues, aux équipements et aux pièces susceptibles d'être montés ou utilisés sur un véhicule à roues et les conditions de reconnaissance réciproque des homologations délivrées conformément à ces prescriptions.

Les constructeurs automobiles, notamment français, conçoivent des modèles aux formes toujours plus innovantes. Notamment, les pare-brise dessinés peuvent être très grands puisqu'ils prennent parfois même une partie du toit en venant au-dessus des passagers aux places avant. Ces pare-brise sont également de plus en plus inclinés vers l'horizontale. Par ailleurs, leurs courbures doivent être très régulières pour bien se fondre dans l'allure générale de la voiture.

Dans le cadre de travaux de développement de tels pare-brise, on a découvert que le niveau de double-image vertical était supérieur au niveau de double-image théorique sans a priori savoir pourquoi. Les pare-brise en question avaient été réalisés par un procédé de bombage par gravité, ledit procédé devant théoriquement très bien convenir à leur formage. Le niveau de double-image vertical était supérieur d'environ 50% au niveau de double-image théorique.

De nombreux procédés de bombage ont déjà été décrits comme le bombage par gravité selon les EP0448447, EP0705798 et W02004/103922, le bombage par défilement entre des rouleaux de convoyage comme dans les W02004/033381 ou W02005/047198, le bombage par pressage contre une forme pleine, ledit pressage étant réalisé soit à l'aide d'un cadre comme dans US5974836, WO95/01938, WO02/06170 ou WO2004/087590, soit par aspiration comme dans les WO02/064519 ou WO2006/072721.

La présente invention repose sur la découverte de ce que ces grands vitrages particulièrement bombés dans toutes les directions en zone centrale présentent un fort niveau de double-image lorsqu'ils sont réalisés par gravité alors qu'ils présentent un niveau de double-image bien plus proche de la théorie lorsqu'ils sont réalisés par pressage contre une forme pleine. Sans que ces explications ne puissent limiter la portée de l'invention, il semble que le procédé par gravité produise un léger amincissement de la feuille de verre en zone centrale, de sorte que les deux faces de la feuille ne sont en fait pas rigoureusement parallèles mais forment un très léger prisme. Les variations en question sont très faibles, de l'ordre de 40 à 50 µm, mais cela suffit à amplifier de façon très visible pour l'oeil humain le phénomène de double-image surtout lorsque le pare-brise est très incliné. Ce défaut découle de la combinaison des facteurs suivants : fortes courbures dans toutes les directions, grandes tailles, utilisation d'un procédé par gravité qui implique notamment de plus fortes températures de bombage. La forte inclinaison du vitrage sur le véhicule automobile accentue encore le phénomène.

On doit de plus prendre en considération que la variation d'épaisseur du verre plat de départ (verre flotté ou « float », fabriqué par flottage sur métal fondu) a une influence sur la variation d'épaisseur du verre bombé. Le verre float présente généralement une variation d'épaisseur plus importante en direction transversale qu'en direction longitudinale. La direction longitudinale du verre flotté correspond à la direction de défilement du verre dans l'installation de flottage du verre. Les directions transversale et longitudinale d'un verre float se voient très bien en ombroscopie grâce à des lignes correspondant à la direction longitudinale. Ainsi, un verre float est parfaitement identifiable par ces lignes et par le fait que l'une de ses faces est enrichie en étain. Dans le cadre de la présente invention, on utilise avant bombage un verre float présentant une variation d'épaisseur inférieure à 50 µm pour 500 mm en direction transversale et inférieure à 2 µm pour 500 mm en direction longitudinale. Pour des raisons de qualité optique en transmission, on dispose généralement le vitrage sur le véhicule automobile de sorte que la direction transversale du verre corresponde à l'horizontale.

Grâce à l'invention, on a réussi à réduire la variation d'épaisseur d'une feuille de verre float bombée en direction longitudinale à moins de 10 µm sur 500 mm et même moins de 7 µm sur 500 mm, réduisant de fait le niveau de double-image vertical (ou longitudinale par rapport à la direction float) à au plus 7 minutes avec un angle de vision de 20° (angle entre l'horizontale et une corde longitudinale passant par les milieux des deux bandes transversales).

Les épaisseurs (et donc les variations d'épaisseur) peuvent être mesurées par un micromètre (ou « Palmer ») ou à l'aide d'un capteur sans contact, notamment un capteur optique confocal. Ceci vaut pour les feuilles de verre individuelles et pour le vitrage assemblé.

Le vitrage selon l'invention est bombé selon deux directions orthogonales entre elles et possède donc deux profondeurs de bombage. L'homme du métier du vitrage automobile désigne par « flèche », la plus grande profondeur de bombage transversal (par rapport au véhicule automobile). Il désigne par double-bombage la plus grande profondeur de bombage longitudinal (par rapport au véhicule automobile).

Les vitrages, notamment du type pare-brise automobile comprennent généralement globalement quatre côtés (ou « bandes »).

Le vitrage concerné par la présente invention est de grande dimension, sa largeur étant généralement supérieure à 1,10 m, sa longueur étant généralement supérieure à 1,10 m voire même supérieure à 1,3 m. De plus, il présente les caractéristiques suivantes (de même que chaque feuille de verre dont il est constitué):
a) sa surface (aire de l'une de ses faces principales) est supérieure à 1,5 m² et peut même être supérieure à 1,6 m² et même supérieure à 1,8 m²;
b) le produit de ses deux profondeurs de bombage est supérieur à 3000 mm² et peut-même dépasser 5000 mm², voire même 8000 mm² ;
c) le point du vitrage situé sur la normale à sa surface et passant par son barycentre présente un rayon de courbure inférieur à 3 m et même inférieur à 2,5 m dans n'importe quelle direction.

La condition a) ci-dessus traduit le fait que le vitrage est grand à la fois en largeur et en longueur. La condition b) traduit le fait que le vitrage est fortement bombé dans toutes les directions. La condition c) traduit le fait que le vitrage est bombé fortement et régulièrement dans toutes les directions dans une zone centrale essentielle pour la vision. En effet, un vitrage peut avoir une forte flèche et un fort contre-bombage sans que sa courbure ne soit très prononcée en région centrale comme cela est représenté sur la figure 2 a). Ce type de forme est assez courant et facile à obtenir par formage par gravité. L'affaissement de la zone proche des bords est appelé « effet baignoire » (« bath effect » en anglais) par l'homme du métier. La zone centrale est peu incurvée. Ce type de forme est considéré comme étant peu esthétique aujourd'hui. On sait éviter cet effet baignoire dans un procédé par gravité en prévoyant un support en zone interne comme enseigné dans W02004/103922.

Ainsi, l'invention concerne en premier lieu une feuille de verre float bombée dont l'aire d'une face principale est supérieure à 1,5 m² et dont le produit de ses deux profondeurs de bombage est supérieur à 3000 mm², et tel que son point situé sur la normale à sa surface, ladite normale passant par son barycentre, présente un rayon de courbure inférieur à 3 m dans n'importe quelle direction, la variation de son épaisseur en direction de flottage longitudinale étant inférieure à 10 µm sur 500 mm et de préférence inférieure à 7 µm sur 500 mm.

Généralement, l'aire d'une face principale de la feuille de verre est inférieure à 3 m².

Le produit de ses deux profondeurs de bombage peut être supérieur à 6000 mm² et est généralement inférieur à 150000 mm².

Le point du vitrage situé sur la normale à sa surface, ladite normale passant par son barycentre, peut présenter un rayon de courbure inférieur à 2 m dans n'importe quelle direction et il est généralement supérieur à 1 m.

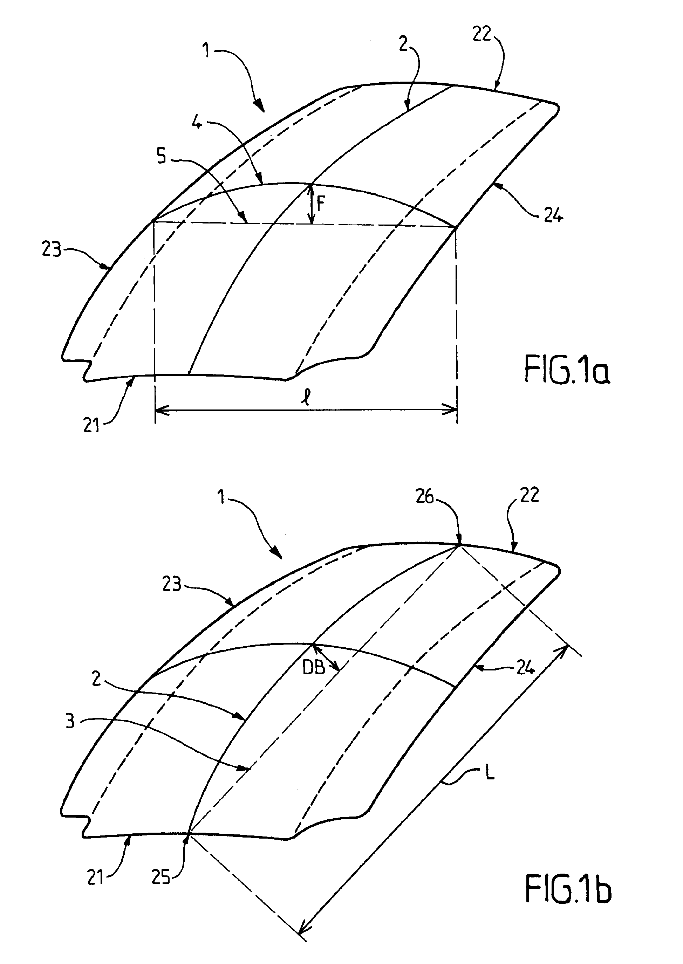

Selon l'invention, le bombage du grand vitrage selon l'invention est réalisé par formage sur une forme de bombage pleine, la force de plaquage du verre contre ladite forme pouvant être de nature mécanique ou pneumatique. Si la force est de nature mécanique elle peut être appliquée par une contre-forme pleine ou en forme de cadre. Notamment, il peut s'agir d'un cadre comme représenté sous la référence (4) de la figure 1 du WO95/01938 ou le cadre segmenté référencé (9,10,11,12) aux figures 1 et 2 du US5974836. Si la force est de nature pneumatique, elle peut-être appliquée par aspiration au travers de la forme pleine grâce à des orifices dans la surface de contact de ladite forme pleine comme représenté sur la figure 2 du WO2006/072721. Une force pneumatique peut également être appliquée par l'intermédiaire d'une jupe entourant la forme pleine sur le modèle de la jupe référencée 16 à la figure 2 du WO04087590. La jupe procure une force d'aspiration générant un flux d'air entourant la feuille en léchant sa tranche. Cependant la force pneumatique exercée par une jupe est généralement insuffisante et est de préférence complétée par une force de nature mécanique ou pneumatique au travers de la forme pleine.

Le bombage contre une forme pleine intervient au moins en fin de bombage, c'est à-dire juste avant le refroidissement. Ainsi, ce bombage contre une forme pleine est-il suivi directement (c'est-à-dire sans étape particulière supplémentaire de bombage) par une étape de refroidissement, généralement un refroidissement naturel, généralement posé un cadre.

Ce bombage contre la forme pleine confère au vitrage au moins 50% de chacune des deux profondeurs du bombage final, voire même au moins 60% de chacune des deux profondeurs de bombage final. Ces deux profondeurs de bombage correspondent à la flèche et au double-bombage comme déjà explicité. Généralement, ces deux profondeurs de bombage correspondent à des directions de bombage orthogonales entre elles et l'une de ces deux profondeurs est la plus importante profondeur de bombage de la feuille.

Le formage contre une forme pleine peut être précédé d'un bombage par un autre procédé, notamment et de préférence par un bombage par gravité. L'existence d'un tel prébombage par gravité est même préférée car Il permet au final d'accroître la complexité du vitrage (plus grandes profondeurs de bombage dans toutes les directions), sans dégrader le niveau de qualité optique. Ce bombage par gravité est réalisé sur un support du type cadre ou squelette, notamment du type double squelette (voir les EP0448447, EP0705798 et W02004/103922). Ce bombage préliminaire (ou prébombage) confère au vitrage moins de 50% de chacune des deux profondeurs de bombage final, voire même moins de 40% de chacune des deux profondeurs de bombage final.

Le bombage contre une forme pleine est de préférence réalisé de sorte que le verre, au point situé sur la normale à sa surface passant par son barycentre est à une température comprise entre 590 et 615 °C.

L'éventuel bombage préliminaire par gravité est de préférence réalisé de sorte que le verre, au point situé sur la normale à sa surface passant par son barycentre est à une température comprise entre 610 et 640 °C.

Pour toutes les étapes de bombage, les différentes feuilles de verre destinées à être assemblées dans le même vitrage feuilleté final (généralement au nombre de deux feuilles) sont généralement superposées et bombées ensemble et simultanément. Une poudre intercalaire est placée entre les différentes feuilles de façon connue de l'homme du métier pour limiter au maximum leur tendance à se coller entre elles.

On considère que le point du vitrage feuilleté situé sur la normale à sa surface, ladite normale passant par le barycentre dudit vitrage, est sensiblement au même endroit que le point de chacune des feuilles du vitrage situé sur la normale à la surface de chaque feuille et passant par le barycentre de ladite feuille.

La variation d'épaisseur de chaque feuille de verre bombée selon l'invention est inférieure à 10 µm, et de préférence inférieure à 7 µm, voire même inférieure à 3 µm sur 500 mm, en direction float longitudinale. Cette variation d'épaisseur est la différence entre la plus grande et la plus petite épaisseur de la feuille sur une distance de 500 mm en surface dans la direction longitudinale. Avant bombage, la feuille de verre est plane et présente une variation d'épaisseur inférieure à 2 µm sur 500 mm en direction float longitudinale.

La feuille de verre présente généralement une épaisseur allant de 1 à 4 mm et plus généralement de 1,1 à 2,8 mm.

La feuille de polymère (généralement du type Polyvinylbutyral ou « PVB ») insérée entre deux feuilles de verre au sein du vitrage feuilleté présente généralement une épaisseur allant de 0,3 à 1,6 mm.

Les feuilles de verre sont assemblées dans un vitrage feuilleté de sorte que les directions (ou orientation) de flottage des feuilles soient concordantes entre elles. Ainsi, l'invention concerne également un vitrage feuilleté comprenant plusieurs feuilles bombées selon l'invention (généralement deux feuilles), ledit vitrage présentant un niveau de double-image mesuré
- au travers du point de sa surface situé sur la normale à sa surface passant par son barycentre et
- sous un angle de vision de 20°,
d'au plus 7'. Ce vitrage est destiné à équiper toutes sortes de véhicules et notamment les véhicules automobiles. La direction transversale de flottages des feuilles de verre assemblées dans le vitrage correspond à l'horizontale pour le véhicule.
La figure 1a) illustre ce que l'on entend par flèche F et largeur I d'un vitrage 1 en position de montage sur véhicule automobile. La flèche F, plus grande profondeur de bombage transversal, est la longueur du plus grand segment ayant pour extrémités le milieu d'un arc transversal 4 et le milieu de la corde 5 qui lui correspond, ladite corde étant ici la largeur I du vitrage. Ce vitrage comporte globalement quatre bandes (ou côtés), deux bandes transversales 21 et 22 et deux bandes longitudinales 23 et 24.
La figure 1b) illustre ce que l'on entend par double-bombage DB et longueur L d'un vitrage 1. Le double-bombage DB, plus grande profondeur de bombage longitudinal, est la longueur de la plus grande distance entre un point d'un arc longitudinal 2 (passant par les milieux des deux bandes transversales 21 et 22) et la corde 3 qui lui correspond (cette corde est aussi ici la longueur L du vitrage). Les bandes transversales 21 et 22 ont respectivement un milieu 25 et 26.
La figure 2 compare deux vitrages ayant la même profondeur 7 de bombage tout en étant très différents en courbures en zone centrale 8 et 9. Le vitrage 10 de la figure 2a) est assez plat en zone centrale 8 alors que le vitrage 11 de la figure 2b) est plus courbé en zone centrale 9, ce qui va de pair avec une forme plus harmonieuse, une meilleure qualité d'essuyage et ce qui est mieux adapté à la forme générale des voitures actuelles.
La figure 3 représente un vitrage 12 comme s'il était monté sur un véhicule automobile en coupe par son arc longitudinal passant en son plan vertical de symétrie (il s'agit de l'arc 2 de la figure 1 b passant par les milieux 25 et 26 des deux bandes transversales 21 et 22), et l'angle alpha de 20° (angle de vision) sous lequel le niveau de double-image vertical est mesuré. On mesure le niveau de double image vertical sous un angle alpha de 20° compris entre la ligne horizontale 13 et la corde 14 de l'arc longitudinal passant par les milieux des bandes transversales (il s'agit de la corde 3 de la figure 1 b, laquelle passe par les milieux 25 et 26 des bandes transversales 21 et 22). La ligne horizontale 13 correspond sensiblement à la direction de vision des passagers du véhicule automobile.

### EXEMPLES

On a fabriqué des pare-brise identiques à partir de lots de feuilles de verre float identiques mais par deux procédés de bombage différents. Deux modèles ont été fabriqués. L'un était très grand (appelé « TG ») et l'autre était de dimension plus habituelle (appelé « N »). Les dimensions de ces pare-brise étaient les suivantes :
Très grand Pare-brise (TG):
   - longueur L : 1,48 m
   - largeur I: 1,4 m (horizontale lorsque le pare-brise est monté sur la voiture)
   - L x I = 2,072 m²
   - Flèche F : 103 mm
   - Double-bombage DB : 105 mm
   - F x DB = 10815 mm²
   - Plus grand rayon de courbure au point P situé sur la normale à la surface passant par le barycentre: 1500 mm.
Pare-brise normal (N):
   - longueur L : 1,1 m
   - largeur I: 1,2 m (horizontale lorsque le pare-brise est monté sur la voiture)
   - L x I = 1,32 m²
   - Flèche F : 80 mm
   - Double-bombage DB : 25 mm
   - F x DB = 2000 mm²
   - Plus grand rayon de courbure au point P situé sur la normale à la surface passant par le barycentre: 3500 mm.

Les pare-brise étaient feuilletés et comprenaient deux feuilles de verre d'épaisseur 2,1 mm chacune, séparées par une feuille de PVB d'épaisseur 0,76 mm. Dans tous les cas, les deux feuilles de verre étaient bombées ensemble en étant superposées.

Le vitrage N a été bombé de façon classique par gravité à l'aide d'un double-squelette du type de celui décrit dans la figure 3 du W004103922. Pour l'exemple comparatif n° 2, le pare-brise G a été bombé par gravité à l'aide d'un squelette multi-support dont un en zone interne de façon à éviter tout effet baignoire, sur le principe de la figure 9 du W004103922. Pour l'exemple comparatif n° 3, le pare-brise TG a été bombé tout d'abord par gravité par un squelette simple à la température de 620°C jusqu'à l'obtention d'une flèche représentant 30% de la flèche finale et jusqu'à l'obtention d'un double-bombage représentant 50 % du double-bombage final. Le vitrage ainsi pré-bombé a ensuite été soumis à un formage par pressage contre une forme pleine sur le principe du procédé de la figure 2 du W004087590, à 600°C.

La variation d'épaisseur de chaque feuille de verre était mesurée avant assemblage à l'aide d'un capteur optique confocal.

Deux feuilles de verre étaient ensuite assemblées en vitrage feuilleté avec une feuille intermédiaire de PVB de façon connue de l'homme du métier.

Le niveau de double image était mesuré sur le vitrage feuilleté au point P situé sur la normale à la surface passant par le barycentre du vitrage, avec un angle de vision alpha de 20° entre l'horizontale et la corde longitudinale reliant les deux points du vitrage à mi-distance des deux bandes transversales. La mesure du niveau de double-image était réalisée par la technique mesure à la cible (en anglais : « Target test ») ou la technique du test au collimateur (en anglais : « collimation-telescope test ») telles que décrites dans la régulation ECE R43.

Le tableau 1 rassemble les résultats. Les températures indiquées dans ce tableau sont celles de chaque feuille de verre au point P situé sur la normale à la surface passant par le barycentre.

**Tableau 1**

| **Exemple N°** | 1 (comparatif) | 2 (comparatif) | 3 |
|---|---|---|---|
| **Taille du Pare-Brise** | N | TG | TG |
| **Type de bombage** | Gravité | Gravité | Gravité puis pressage |
| **Température verre en fin de bombage** | 632°C | 632°C | 590°C |
| **Variation d'épaisseur de chaque feuille de verre en direction longitudinale sur 500 mm.** | 6 µm | 15 µm | 5,6 µm |
| **Niveau de double image vertical du vitrage feuilleté sous un angle de 20°** | 7' | 10' | 6' |

## Revendications

1. Feuille de verre (12) flotté bombée dont l'aire d'une face principale est supérieure à 1,5 m² et dont le produit de ses deux profondeurs de bombage est supérieur à 3000 mm², et telle que son point (P) situé sur la normale (15) à sa surface passant par son barycentre (B) présente un rayon de courbure inférieur à 3 m dans n'importe quelle direction, la variation de son épaisseur étant inférieure à 10 µm sur 500 mm en direction de flottage longitudinal.

2. Feuille selon la revendication précédente, **caractérisée en ce que** la variation de son épaisseur est inférieure à 7 µm sur 500 mm en direction de flottage longitudinal.

3. Feuille selon l'une des revendications précédentes, **caractérisée en ce que** l'aire d'une face principale est supérieure à 1,8 m².

4. Feuille selon l'une des revendications précédentes, **caractérisée en ce que** le produit de ses deux profondeurs de bombage est supérieur à 6000 mm², le point (P) situé sur la normale (15) à sa surface passant par son barycentre (B) présentant un rayon de courbure inférieur à 2 m dans n'importe quelle direction.

5. Feuille selon l'une des revendications précédentes, **caractérisée en ce que** son épaisseur va de 1,1 à 2,8 mm.

6. Vitrage feuilleté comprenant plusieurs feuilles de l'une des revendications précédentes, les orientations de flottage desdites plusieurs feuilles étant concordantes entre elles.

7. Vitrage selon la revendication précédente, **caractérisé en ce que** le niveau de double-image mesuré
- au travers du point (P) de sa surface situé sur la normale (15) à sa surface passant par son barycentre (B) et
- sous un angle (α) de vision de 20°,
est au plus de 7'.

8. Pare-brise comprenant le vitrage de la revendication précédente.

9. Véhicule automobile comprenant le pare-brise de la revendication précédente, la direction de flottage transversale étant horizontale.

10. Procédé de fabrication d'une feuille de verre bombée de l'une des revendications de feuille de verre précédentes, comprenant une étape de bombage contre une forme pleine conférant au vitrage au moins 50% de chacune de ses deux profondeurs de bombage finales.

11. Procédé selon la revendication précédente, **caractérisé en ce que** lors du bombage contre la forme pleine, la température du verre au point de sa surface situé sur la normale à sa surface passant par son barycentre est comprise entre 590 et 615°C.

12. Procédé selon la revendication précédente, **caractérisé en ce que** l'étape de bombage contre une forme pleine est suivie directement d'une étape de refroidissement.

13. Procédé selon l'une des revendications de procédé précédentes 10 à 12, **caractérisé en ce que** l'étape de bombage contre une forme pleine est précédée d'une étape de bombage par gravité.

14. Procédé selon la revendication précédente, **caractérisé en ce que** lors du bombage par gravité, la température du verre au point (P) de sa surface situé sur la normale (15) à sa surface passant par son barycentre (B) est comprise entre 610 et 640°C.

15. Procédé selon l'une des revendications de procédé précédentes 10 à 14, **caractérisé en ce que** plusieurs feuilles de verres superposées sont bombées simultanément.

## Patentansprüche

1. Gewölbte Floatglasscheibe (12), deren Fläche auf einer Hauptseite größer als 1,5 m² ist und bei der das Produkt ihrer zwei Wölbungstiefen größer als 3000 mm² ist, und die derart ist, dass ihr Punkt (P), der sich auf der Normalen (15) zu ihrer Fläche befindet, die durch ihren Massenmittelpunkt (B) verläuft, einen Krümmungsradius aufweist, der in jede Richtung kleiner als 3 m ist, wobei die Veränderung ihrer Dicke in der Längs-Float-Richtung über 500 mm kleiner als 10 µm ist.

2. Scheibe nach dem vorhergehenden Anspruch, **dadurch gekennzeichnet, dass** die Änderung ihrer Dicke in der Längs-Float-Richtung über 500 mm kleiner als 7 µm ist.

3. Scheibe nach einem der vorhergehenden Ansprüche, **dadurch gekennzeichnet, dass** die Fläche einer Hauptseite größer als 1,8 m² ist.

4. Scheibe nach einem der vorhergehenden Ansprüche, **dadurch gekennzeichnet, dass** das Produkt ihrer zwei Wölbungstiefen größer als 6000 mm² ist, wobei der Punkt (P), der sich auf der Normalen (15) zu ihrer Fläche befindet, die durch ihren Massenmittelpunkt (B) verläuft, einen Krümmungsradius aufweist, der in jede Richtung kleiner als 2 m ist.

5. Scheibe nach einem der vorhergehenden Ansprüche, **dadurch gekennzeichnet, dass** ihre Dicke von 1,1 bis 2,8 mm reicht.

6. Verbundverglasung, die mehrere Scheiben nach einem der vorhergehenden Ansprüche umfasst, wobei die Float-Ausrichtungen der mehreren Scheiben untereinander übereinstimmen.

7. Verglasung nach dem vorhergehenden Anspruch, **dadurch gekennzeichnet, dass** der gemessene Doppelbild-Effekt, der:
- durch den Punkt (P) ihrer Fläche, der sich auf der Normalen (15) zu ihrer Fläche befindet, die durch ihren Massenmittelpunkt (B) verläuft, und
- aus einem Sehwinkel (α) von 20°
gemessen wird, höchstens 7' beträgt.

8. Windschutzscheibe, umfassend die Verglasung nach dem vorhergehenden Anspruch.

9. Kraftfahrzeug, das die Windschutzscheibe nach dem vorhergehenden Anspruch umfasst, wobei die Quer-Float-Richtung horizontal ist.

10. Verfahren zur Herstellung einer gewölbten Glasscheibe nach einem der vorhergehenden Glasscheibenansprüche, das einen Schritt des Biegens gegen eine Vollform umfasst, das der Verglasung mindestens 50 % von jeder ihrer zwei Endwölbungstiefen verleiht.

11. Verfahren nach dem vorhergehenden Anspruch, **dadurch gekennzeichnet, dass** die Temperatur des Glases am Punkt ihrer Fläche, der sich auf der Normalen zu ihrer Fläche befindet, die durch ihren Massenmittelpunkt verläuft, beim Biegen gegen die Vollform zwischen 590 und 615 °C enthalten ist.

12. Verfahren nach dem vorhergehenden Anspruch, **dadurch gekennzeichnet, dass** direkt auf den Schritt des Biegens gegen eine Vollform ein Abkühlungsschritt folgt.

13. Verfahren nach einem der vorhergehenden Verfahrensansprüche 10 bis 12, **dadurch gekennzeichnet, dass** dem Schritt des Biegens gegen eine Vollform ein Schritt des Biegens mittels Schwerkraft vorausgeht.

14. Verfahren nach dem vorhergehenden Anspruch, **dadurch gekennzeichnet, dass** die Temperatur des Glases am Punkt (P) seiner Fläche, der sich auf der Normalen (15) zu seiner Fläche befindet, die durch ihren Massenmittelpunkt (B) verläuft, beim Biegen mittels Schwerkraft zwischen 610 und 640 °C enthalten ist.

15. Verfahren nach einem der vorhergehenden Verfahrensansprüche 10 bis 14, **dadurch gekennzeichnet, dass** mehrere übereinander angeordnete Glasscheiben gleichzeitig gebogen werden.

## Claims

1. A curved glass pane (12), made of float glass, the area of a main face of which is greater than 1.5 m² and the product of its two depths of bending is greater than 3000 mm², and such that its point (P) located on the normal (15) to its surface passing through its center of gravity (B) has a radius of curvature of less than 3 m in any direction, the variation in its thickness in the longitudinal float direction being less than 10 µm over 500 mm.

2. The pane as claimed in the preceding claim, **characterized in that** the variation in its thickness is less than 7 µm over 500 mm in the longitudinal float direction.

3. The pane as claimed in either of the preceding claims, **characterized in that** the area of a main face is greater than 1.8 m².

4. The pane as claimed in one of the preceding claims, **characterized in that** the product of its two depths of bending is greater than 6000 mm², the point (P) located on the normal (15) to its surface passing through its center of gravity (B) having a radius of curvature of less than 2 m in any direction.

5. The pane as claimed in one of the preceding claims, **characterized in that** its thickness ranges from 1.1 to 2.8 mm.

6. A laminated glazing assembly comprising several panes of one of the preceding claims, the float directions of said several panes being mutually concordant.

7. The glazing assembly as claimed in the preceding claim, **characterized in that** the measured level of double imaging:
- through the point (P) on its surface located on the normal (15) to its surface passing through its center of gravity (B) and
- at a viewing angle of 20°,
is at most 7 minutes.

8. A windshield comprising the glazing of the preceding claim.

9. A motor vehicle comprising the windshield of the preceding claim, the transverse float direction being horizontal.

10. A process for manufacturing a curved glass pane of one of the preceding glass pane claims, which includes a step of bending the pane against a solid mold, giving the glazing at least 50% of each of its two final depths of bending.

11. The process as claimed in the preceding claim, **characterized in that**, during bending against the solid mold, the temperature of the glass at the point on its surface located on the normal to its surface passing through its center of gravity is between 590 and 615°C.

12. The process as claimed in the preceding claim, **characterized in that** the step of bending the pane against a solid mold is directly followed by a cooling step.

13. The process as claimed in one of the preceding process claims 10 to 12, **characterized in that** the step of bending the pane against a solid mold is preceded by a gravity bending step.

14. The process as claimed in the preceding claim, **characterized in that**, during gravity bending, the temperature of the glass at the point (P) on its surface located on the normal (15) to its surface passing through its center of gravity (B) is between 610 and 640°C.

15. The process as claimed in one of the preceding process claims 10 to 14, **characterized in that** several superposed glass panes are bent simultaneously.
